(19) Europäisches Patentamt / European Patent Office / Office européen des brevets

(11) **EP 2 985 765 B1**

(12) **EUROPEAN PATENT SPECIFICATION**

(45) Date of publication and mention
of the grant of the patent:
**18.03.2020 Bulletin 2020/12**

(51) Int Cl.:
*H01B 7/02* (2006.01)    *C08F 210/06* (2006.01)
*H01B 3/44* (2006.01)    *H01B 11/00* (2006.01)

(21) Application number: **15187625.7**

(22) Date of filing: **30.11.2011**

(54) **INSULATED WIRE AND CABLE**

ISOLIERTER DRAHT UND KABEL

FIL ET CÂBLE ISOLÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2010 JP 2010268854
01.12.2010 JP 2010268856
01.12.2010 JP 2010268857**

(43) Date of publication of application:
**17.02.2016 Bulletin 2016/07**

(62) Document number(s) of the earlier application(s) in
accordance with Art. 76 EPC:
**11844221.9 / 2 648 191**

(73) Proprietor: **FUJIKURA LTD.
Koto-ku
Tokyo 135-8512 (JP)**

(72) Inventor: **Watanabe, Ryo
Chiba, 285-8550 (JP)**

(74) Representative: **Hoffmann Eitle
Patent- und Rechtsanwälte PartmbB
Arabellastraße 30
81925 München (DE)**

(56) References cited:
**EP-A1- 2 433 982    FR-A1- 2 917 741**

• **DATABASE WPI Week 200950 Thomson
Scientific, London, GB; AN 2009-L73758
XP002751427, & JP 2009 161644 A (JAPAN
POLYCHEM CORP) 23 July 2009 (2009-07-23)**
• **DATABASE WPI Week 201004 Thomson
Scientific, London, GB; AN 2009-S58441
XP002751428, & JP 2009 299052 A (JAPAN
POLYCHEM CORP) 24 December 2009
(2009-12-24)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to an insulated wire and a cable.

BACKGROUND ART

Accompanying the development of electronic devices using frequencies in the gigahertz band in recent years, USB 3.0 cables, HDMI cables, InfiniBand cables, micro USB cables and other high-speed transmission cables used to connect these devices are being required to have superior dielectric characteristics in the gigahertz band.

The cable described in, for example, JP-A-2009-81132 is known to be such a transmission cable. JP-A-2009-81132 proposes that superior dielectric characteristics are obtained by using, as an insulating layer that covers a conductor, a material obtained by incorporating a phenol-based antioxidant not having a hindered phenol structure in an olefin-based resin.

SUMMARY OF THE INVENTION

PROBLEMS TO BE SOLVED BY THE INVENTION

However, the cable described in the above-mentioned JP-A-2009-81132 had the problems indicated below.

Namely, in the case of using polyethylene for the olefin-based resin of the insulating layer, there are limitations on polyethylene for allowing the obtaining of superior dielectric characteristics in high frequency bands. Therefore, the insulating layer has been used in the form of a foamed body in order to obtain superior dielectric characteristics while using polyethylene for the olefin-based resin of the insulating layer. However, in the case of the insulating layer being in the form of a foamed body, it was necessary to reduce the thickness of the insulating layer accompanying reductions in diameter of the transmission cable. In this case, mechanical strength of the insulating layer decreases and the insulating layer is easily crushed by lateral pressure. Consequently, it is difficult to impart heat resistance at the level of UL90°C to the insulating layer with polyethylene. Therefore, it was considered to use a propylene-based resin having a higher melting point instead of polyethylene for the olefin-based resin from the viewpoint of imparting heat resistance at the level of UL90°C to the insulating layer. However, in the case of an insulating layer that contains a propylene-based resin, there are cases in which dielectric tangent in the gigahertz band cannot be said to be sufficiently small, thereby leaving room for improvement with respect to dielectric characteristics in the gigahertz band.

In addition, an object of the present invention is to provide an insulated wire and a cable capable of realizing superior dielectric characteristics in the gigahertz band as well as superior crush resistance and heat resistance.

MEANS FOR SOLVING THE PROBLEMS

The present inventor conducted extensive studies to achieve the above-mentioned object. As a result, the present inventor considered the following. Namely, as a result of ethylene and butene present in a propylene-based copolymer inhibiting crystallization of propylene, the resulting amorphous portion is susceptible to molecular vibration at high frequencies. Consequently, the present inventor considered that the propylene-based copolymer is susceptible to the occurrence of heat loss, and this might cause an increase in dielectric tangent at high frequencies. Therefore, the present inventor conducted additional extensive studies. As a result, it was found that, by setting the melting point of the propylene-based copolymer to a prescribed range, setting the total content of ethylene and butene in the propylene-based copolymer to a prescribed value or less, and preventing the content of butene in the propylene-based copolymer from exceeding a prescribed value, the above-mentioned object can be achieved.

Moreover, the present inventor conducted further extensive studies to achieve the above-mentioned object. As a result, the present inventor noticed that there is a correlation between the interval between the portion of the peak of the heat of melting and the portion of the peak of the heat of crystallization observed in a DSC curve of a propylene-based copolymer, and dielectric characteristics in the gigahertz band. Therefore, the present inventor conducted additional extensive studies. As a result, it has been found that, by setting the melting point of the propylene-based copolymer to a prescribed range and setting the difference between the melting point determined from the portion of the peak of the heat of melting and the crystallization peak temperature determined from the portion of the peak of the heat of crystallization to a prescribed range, the above-mentioned object can be achieved.

Therefore, the insulated wire of the invention is an insulated wire comprising a conductor and, covering the conductor, an insulating layer which has a thickness of $\leq 0.3$ mm and contains a propylene-based copolymer which has a melting point of 125-145°C and meets the following requirement (i), (ii) or both (i) and (ii):

(i) the total content of ethylene and butene in the propylene-based copolymer is ≤ 7 mass-%, and the content of butene in the propylene-based copolymer does not exceed 2% by mass

(ii) the propylene-based copolymer satisfies the equation:

$$\texttt{(melting point - crystallization peak temperature) = 30-40°C.}$$

According to this insulated wire, superior dielectric characteristics in the gigahertz band as well as superior crush resistance and heat resistance can be realized.

In the insulated wire of the invention, the above-mentioned propylene-based copolymer is preferably a propylene-based copolymer obtained by synthesis using a metallocene catalyst.

In this case, the width of molecular weight distribution can be narrowed in comparison with propylene-based copolymers synthesized using a general-purpose catalyst such as a Ziegler-Natta catalyst. As a result, the ratio of low molecular weight components susceptible to the occurrence of molecular vibration at high frequencies can be further reduced, and increases in dielectric tangent caused by low molecular weight components can be adequately inhibited.

In the insulated wire of the invention, the above-mentioned propylene-based copolymer is preferably a random copolymer.

In this case, the melting point of the propylene-based copolymer can be lowered further and flexibility of the insulated wire can be further improved in comparison with the case in which the propylene-based copolymer is a block copolymer.

In the insulated wire of the invention, the propylene-based copolymer preferably has a degree of crystallization of 38-60%.

In this case, as a result of the ratio of amorphous components susceptible to molecular vibration at high frequencies being further reduced in comparison with the case in which the degree of crystallization of the propylene-based copolymer is < 38%, dielectric tangent can be more adequately lowered. In addition, if the degree of crystallization of the propylene-based copolymer is within the above-mentioned range, more suitable flexibility is obtained in comparison with the case of the degree of crystallization of the propylene-based copolymer exceeding 60%.

In the insulated wire of the invention, the conductor preferably has a body portion containing at least one type of material selected from copper, copper alloy, aluminum and aluminum alloy, and a plating film covering the body portion and containing at least one type of material selected from tin and silver.

In this case, the body portion, which causes degradation of the base resin in the insulating layer, is covered with a plating film that contains at least one type of material selected from tin and silver. Consequently, degradation of the propylene-based copolymer attributable to the conductor is adequately inhibited even if an antioxidant or metal deactivator is not contained in the insulating layer.

In the insulated wire of the invention, the above-mentioned insulating layer has a thickness of ≤ 0.3 mm.

Propylene-based copolymers are typically brittle and tend to become even more brittle at lower temperatures normal temperature. Consequently, cracks and the like easily form in the insulating layer when the insulated wire is bent. In this point, if the thickness of the insulating layer is ≤0.3 mm there is considerably less susceptibility to occurrence of the problem of embrittlement, and particularly low-temperature embrittlement, in comparison with the case of the thickness of the insulating layer exceeding 0.3 mm.

In addition, the insulated wires of the present invention are preferably insulated wires used in a transmission cable.

In addition, a cable of the present invention is a cable having an insulated wire of the present invention.

Moreover, a transmission cable of the present invention is a transmission cable having the above-mentioned insulated wire used in a transmission cable.

In the present invention, "melting point" refers to melting point as measured according to the method of JIS-K7121. More specifically, when a sample in an amount of about 5 mg is used and the sample is:

1) held at a constant temperature of 200°C for 10 minutes;

2) lowered in temperature from 200°C to -60°C at the rate of 10°C/min;

3) held at a constant temperature of -60°C for 10 minutes; and

4) raised in temperature from -60°C to 200°C at the rate of 10°C/min by DSC (Perkin-Elmer Diamond, input compensation type), the melting point refers to the heat-of-melting peak temperature determined as the peak of the heat of melting observed under the condition 4).

In addition, in the present invention, the contents of ethylene and butene in the propylene-based copolymer are determined by infrared spectroscopy in accordance with the calculation formulas described on pp. 413-415 of the Polymer Analysis Handbook of the Polymer Analysis Research Group, The Japan Society for Analytical Chemistry. More specifically, the ethylene and butene contents in the propylene-based copolymer are determined from absorbance obtained by measuring with an infrared spectrophotometer (PerkinElmer Co., Ltd., Spectrum One, FTIR) under conditions of a resolution of 2 cm$^{-1}$ in the transmission mode at 64 cycles of integration using a test piece obtained by peeling off the insulating layer from an insulated wire and molding the insulating layer to a thickness of 0.5-1 mm with a hydraulic press. Here, ethylene refers to ethylene structural units in the propylene-based copolymer, and not to ethylene monomers. Similarly, butene refers to 1-butene structural units in the propylene-based copolymer, and not to butene monomers. Furthermore, the above-mentioned calculation formulas are represented by the following formulas (1) to (3). Here, $A_k$ represents absorbance at k cm$^{-1}$, t represents the thickness (cm) of the test piece, and $\rho$ represents the density (g/cm$^3$) of the test piece. In addition, "PP" represents the propylene-based copolymer.

$$(1) \text{ Ethylene in random PP (mass-\%)} = (0.509A_{733} + 0.438A_{722})/t\rho$$

$$(2) \text{ Ethylene in block PP (mass-\%)} = (1.10A_{722} - 1.51A_{729} + 0.509A_{733})/t\rho$$

$$(3) \text{ 1-butene (mass-\%)} = 12.3(A_{766}/t)$$

Moreover, in the present invention, "crystallization peak temperature" refers to crystallization peak temperature determined from the peak of the heat of crystallization observed under the conditions described in the above-mentioned 2).

Moreover, in the present invention, "degree of crystallization" is defined with the following formula:

$$Xc = Hm/H_{m0}$$

(wherein, Xc represents degree of crystallization (%), Hm represents heat of melting (J/g), and $H_{m0}$ represents heat of 100% crystallization (J/g) . Here, Hm is the heat of melting at the peak of the heat of melting observed when measuring the melting point of the propylene-based copolymer as previously described, and the value determined according to the method of JIS-K7122 is used as the heat of melting. A value of 165 J/g is used for $H_{m0}$. Here, the value of $H_{m0}$ was excerpted from the Polypropylene Handbook, Edward P. Moore, Jr., ed. (1998, p. 149).

EFFECT OF THE INVENTION

According to the present invention, an insulated wire and a cable are provided that have superior dielectric characteristics in the gigahertz band and are able to realize superior crush resistance and heat resistance.

BRIEF DESCRIPTION OF THE DRAWINGS

FIG. 1 is a partial side view showing an example of the configuration of a cable of the present invention;
FIG. 2 is a cross-sectional view taken along line II-II of FIG. 1;
FIG. 3 is a cross-sectional view showing an example of an internal conductor; and
FIG. 4 is an end view showing another example of the configuration of a cable of the present invention.

MODES FOR CARRYING OUT THE INVENTION

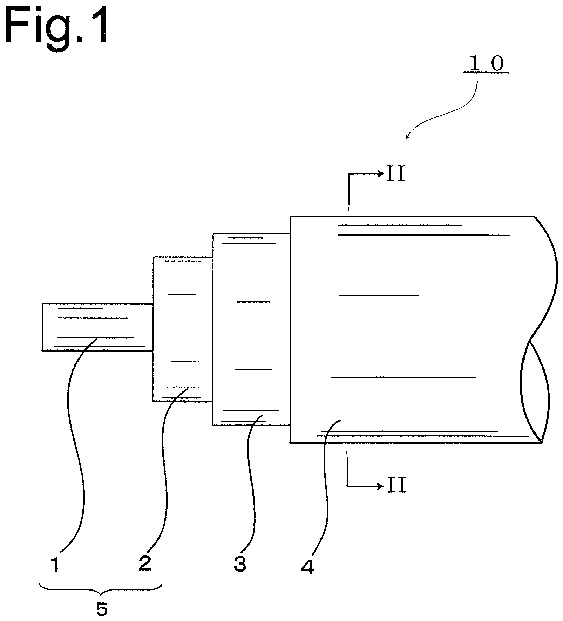

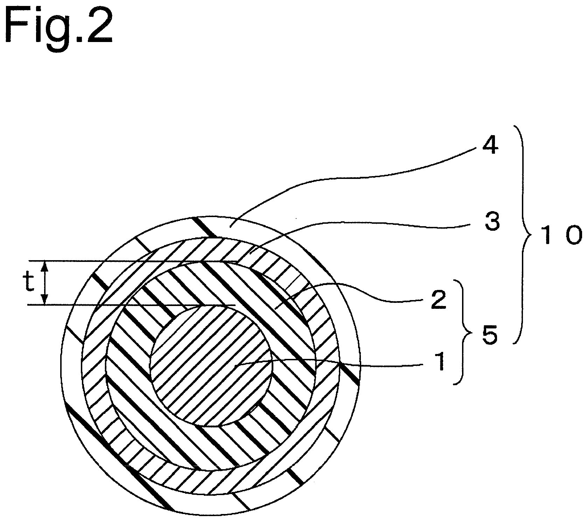

The following provides an explanation of the present invention, and specifically provides a detailed explanation of the present invention using FIGS. 1 and 2.

FIG. 1 is a partial side view showing an example of the configuration of a cable according to the present invention, and shows an example of applying an insulated wire to a transmission cable in the form of a coaxial cable. FIG. 2 is a cross-sectional view taken along line II-II of FIG. 1. As shown in FIG. 1, a cable 10 indicates a coaxial cable which is a transmission cable, and is provided with an insulated wire 5, an external conductor 3 that surrounds the insulated wire 5, and a sheath 4 that covers the external conductor 3. The insulated wire 5 has an internal conductor 1 and an insulating layer 2 that covers the internal conductor 1.

According to the cable 10, superior dielectric characteristics in the gigahertz band can be realized by using the insulated wire 5 that uses the insulating layer 2 having the above-mentioned configuration.

First, an explanation is provided of a production method of the insulated wire 5.

<Internal Conductor>

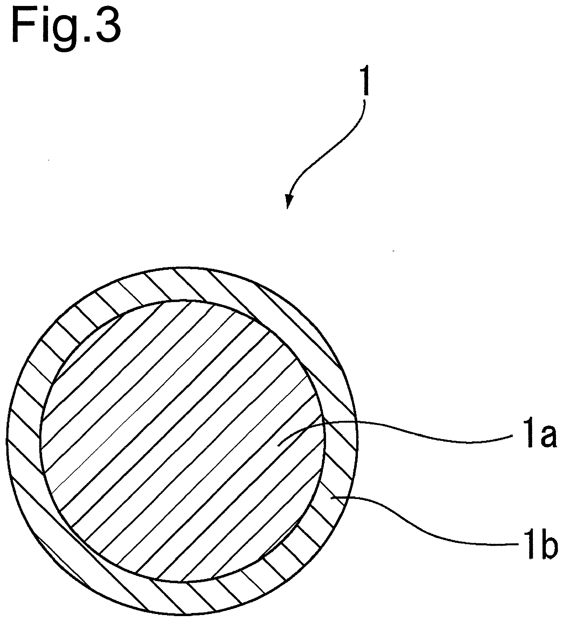

First, the internal conductor 1 is prepared. Examples of the internal conductor 1 include metal wires composed of a metal such as copper, copper alloy, aluminum or aluminum alloy. These metals can be each used alone or in combination. In addition, as shown in FIG. 3, an internal conductor can also be used for the internal conductor 1 that is provided with a body portion 1a composed of the above-mentioned metal, and a plating film 1b that covers the body portion 1a and is formed by carrying out plating composed of at least one type of tin and silver on the surface of the body portion 1a. In addition, a solid wire or stranded wire can also be used for the internal conductor 1.

<Insulating Layer>

Next, the insulating layer 2 is formed on the internal conductor 1. The insulating layer contains a propylene-based copolymer as a base resin which is described further below.

The above-mentioned insulating layer 2 is obtained by loading the base resin in the form of the propylene-based copolymer, the antioxidant, and as necessary, an antioxidant and/or a metal deactivator as described below, into an extruder, melting, kneading and extruding the resin composition in the extruder, and covering the internal conductor 1 with this extrudate.

The outer diameter of the insulating layer 2 is preferably $\leq$ 40 mm, more preferably $\leq$ 8 mm and particularly preferably $\leq$ 1 mm.

Moreover, as shown in FIG. 2, the thickness t of the insulating layer 2 is $\leq$ 0.3 mm and preferably $\leq$ 0.2 mm. Since the propylene-based copolymer is typically brittle and tends to become even more brittle at lower temperatures than normal temperature, cracks and the like easily form in the insulating layer 2 when the cable 10 is bent. In this point, if the thickness t of the insulating layer 2 is $\leq$ 0.3 mm, there is remarkably less susceptibility to the occurrence of the problem of embrittlement, and particularly the problem of low-temperature embrittlement, in comparison with the case of the thickness t exceeding 0.3 mm. However, the thickness t of the insulating layer 2 is normally $\geq$ 0.1 mm.

In the insulated wire 5, although the insulating layer 2 may be a non-foamed body or foamed body, it is preferably a non-foamed body. Production is easier in the case in which the insulating layer 2 is a non-foamed body in comparison with the case of being a foamed body. Consequently, there is less susceptibility to the occurrence of deterioration of skew, deterioration of VSWR and accompanying increases in attenuation caused by e.g. changes in outer diameter of the insulating layer 2. This becomes particularly prominent as the outer diameter of the insulating layer 2 becomes smaller, and more specifically, when the outer diameter of the insulating layer 2 becomes $\leq$ 0.7 mm. Furthermore, in the case in which the insulating layer 2 is a foamed body, the degree of foaming is preferably 30-60%. Here, the degree of foaming is calculated based on the equation indicated below.

[Math. 1]

$$\text{Degree of foaming (\%)} = [1 - (\text{specific gravity of foamed insulating layer after foaming/specific gravity of resin before foaming})] \times 100$$

In this case, increased coarseness of foam cells can be inhibited even when a wire using a propylene-based copolymer for the insulating layer 2 is used as a cable used in the gigahertz band, and a foamed insulating layer 2 can be obtained that has fine, uniform foam cells. In addition, the cable 10 that uses the insulated wire 5 has small variations in outer diameter, has few problems caused by crushing even if the thickness of the insulating layer 2 is reduced, and enables variations such as degradation of attenuation to be adequately inhibited.

In the case in which the insulating layer 2 is a foamed insulating layer, the foamed insulating layer can be obtained by incorporating a foaming agent such as a chemical foaming agent in the resin composition.

In addition, a thin layer composed of an unfoamed resin in the form of a so-called inner layer is preferably interposed between the insulating layer 2 and the internal conductor 1. As a result thereof, adhesion between the insulating layer 2 and the internal conductor 1 can be improved. In the case in which the unfoamed resin is composed of polyethylene in particular, adhesion between the insulating layer 2 and the internal conductor 1 can be further improved. In addition, the above-mentioned inner layer can also prevent degradation (embrittlement) of the insulating layer 2 caused by copper in the internal conductor 1. Furthermore, the thickness of the inner layer is, for example, 0.01-0.1 mm.

Moreover, a thin layer in the form of a so-called outer layer is preferably interposed between the insulating layer 2 and the outer conductor 3. There are many cases in which a transmission cable is required to be colored. In such cases, the use of an unfoamed resin as a thin layer enables coloring to be easily carried out without deteriorating electrical characteristics in comparison with the case of coloring with a pigment. In addition, if a thin layer composed of a foamed resin is interposed between the insulating layer 2 and the external conductor 3, the appearance of the insulated wire 5 is improved. Moreover, variations in outer diameter of the insulated wire 5 become small, skew and VSWR improve, crush resistance improves, and the outer diameter of the insulated wire 5 can be reduced. Furthermore, the thickness of the outer layer is, for example, 0.02-0.2 mm.

Moreover, the insulating layer 2 may be a layer obtained by melting and kneading the resin composition, and extruding and covering the internal conductor 1 followed by crosslinking the extrudate. In this case, although crosslinking treatment can be carried out by, for example, electron beam irradiation, in the case in which the resin composition contains a crosslinking agent such as an organic peroxide or sulfur, crosslinking treatment can also be carried out by heating. However, crosslinking treatment is preferably carried out by electron beam irradiation from the viewpoint of improving electrical characteristics.

<External Conductor>

Next, the external conductor 3 is formed so as to surround the insulated wire 5 obtained in the manner described above. A known external conductor used in the prior art can be used for the external conductor 3. For example, the external conductor 3 can be formed by wrapping a conductive wire, or a tape composed by interposing an electrically conductive sheet between resin sheets around the outer periphery of the insulating layer 2. In addition, the external conductor 3 can also be composed of a metal tube subjected to corrugation processing, namely molded to have a corrugated shape.

<Sheath>

Finally, the sheath 4 is formed. The sheath 4 protects the external conductor 3 from physical or chemical damage, and although examples of materials that compose the sheath 4 include resins such as fluororesin, polyethylene or polyvinyl chloride, from the viewpoints of e.g. environmental considerations, a halogen-free material such as polyethylene resin is used preferably.

The cable 10 is obtained in the manner described above.

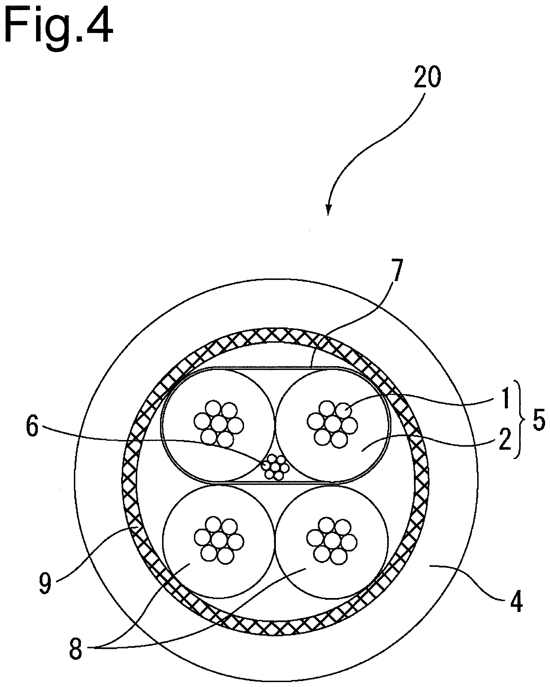

FIG. 4 is an end view showing a cable of the twinax type having the above-mentioned insulated wire 5. As shown in FIG. 4, a twinax cable 20 is provided with two insulated wires 5, a drain wire 6, a laminate tape 7, two electrical power wires 8, a laminate layer 9 composed of an aluminum tape layer and a braid layer, and the sheath 4. Here, the two insulated wires 5 are arranged mutually in parallel and are used as signal wires. In addition, the laminate tape 7 is wrapped around the insulated wires 5 and the drain wire 6, and the sheath 4 is formed on the laminate layer 9 so as to surround the laminate layer 9. The laminate tape 7 is composed of, for example, a laminate of aluminum foil and polyethylene terephthalate film, and the sheath 4 is composed of, for example, an olefin-based non-halogen material such as ANA9897N manufactured by RIKEN TECHNOS CORPORATION. Furthermore, the insulated wire 5 and the insulating layer 2 are the same as the previously described insulated wire 5 and insulating layer 2.

<First Embodiment>

In a cable of a first embodiment of the present invention the insulating layer 2 is composed in the manner described below. Namely, the insulating layer 2 has a thickness of $\leq 0.3$ mm and contains a propylene-based copolymer which has a melting point of 125-145°C and meets the following requirement (i):

(i) the total content of ethylene and butene in the propylene-based copolymer is $\leq 7$ mass-%, and the content of butene in the propylene-based copolymer does not exceed 2% by mass

According to the cable 10 having this type of configuration, superior dielectric characteristics in the gigahertz band can be realized by using the insulated wire 5 that uses the insulating layer 2 having the above-mentioned configuration. The reason for being able to realize superior dielectric characteristics in the gigahertz band by the insulated wire 5 in this manner is thought by the present inventor to be as indicated below. Namely, since ethylene and butene in the propylene-based copolymer inhibit crystallization of propylene, an amorphous portion is formed easily. This amorphous portion is thought to be susceptible to the occurrence of molecular vibration at high-frequency bands and be susceptible to the occurrence of heat loss. Consequently, the inventor of the present invention considered that, if the total content of ethylene and butene becomes high and the content of butene is > 2 mass-%, dielectric tangent may increase easily attributable to the ethylene and butene. Therefore, by making the total content of ethylene and butene to be ≤ 7 mass-% and the content of butene to not exceed 2 mass-% as previously described, a melting point of ≥ 125°C can be imparted to the propylene-based copolymer, and deterioration of dielectric tangent attributable to ethylene and butene can be reduced.

In addition, the propylene-based copolymer has a melting point of 125-145°C. Consequently, adequate mechanical strength can be imparted to the insulating layer 2, and superior crush resistance can be imparted to the insulating layer 2. Consequently, the propylene-based copolymer also has superior heat resistance at the level of UL90°C.

(Base Resin)

The propylene-based copolymer refers to a copolymer of propylene and other olefins, and examples of other olefins include ethylene, 1-butene, 2-butene, 1-hexene and 2-hexene. Other olefins can be used alone or two or more types can be used in combination. Among these, ethylene or 1-butene is used preferably since it lowers crystallinity of the propylene-based copolymer and is able to efficiently lower melting point while minimizing deterioration of various characteristics as much as possible when added in small amounts, and ethylene is used more preferably.

More specifically, examples of propylene-based copolymers include ethylene-propylene copolymers, ethylene-propylene-butene copolymers, propylene-butene copolymers, ethylene-propylene-butene-hexene copolymers, ethylene-propylene-hexene copolymers and propylene-butene-hexene copolymers.

The propylene-based copolymer is preferably obtained by synthesizing using a metallocene catalyst.

In this case, the width of molecular weight distribution of the propylene-based copolymer can be narrowed as compared with a propylene-based copolymer synthesized using a general-purpose catalyst such as a Ziegler-Natta catalyst. As a result, the ratio of low molecular weight components susceptible to the occurrence of molecular vibration at high-frequency bands can be further reduced, and increases in dielectric tangent caused by low molecular weight components can be adequately inhibited. In addition, if the propylene-based copolymer is obtained by synthesizing using a metallocene catalyst, the contents of ethylene and butene in a propylene-based copolymer having a desired melting point can be efficiently reduced.

Although the propylene-based copolymer may be a random copolymer or block copolymer, it is preferably a random copolymer. In this case, the melting point of the propylene-based copolymer can be further lowered and the flexibility of the insulated wire 5 can be further improved in comparison with the case in which the propylene-based copolymer is a block copolymer.

The melting point of the propylene-based copolymer is 125-145°C. If the melting point is < 125°C, adequate heat resistance cannot be obtained, while if the melting point exceeds 145°C, flexibility required for use as a cable is inadequate since the crystallinity of the propylene-based copolymer becomes excessively high.

The melting point of the propylene-based copolymer is preferably 130-145°C and more preferably 133-143°C.

The content of ethylene in the propylene-based copolymer is normally ≤ 5 mass-%, preferably ≤ 4.5 mass-%, and more preferably ≤ 3.0 mass-%. However, from the viewpoint of improving flexibility, the content of ethylene in the propylene-based copolymer is preferably ≥ 1.0 mass-% and more preferably ≥ 1.3 mass-%. In addition, the content of butene in the propylene-based copolymer is within a range that does not exceed 2.0 mass-%, and is preferably ≤ 1.5 mass-% and more preferably ≤ 1.0 mass-%. However, although the content of butene is preferably ≥ 0.5 mass-% from the viewpoint of improving flexibility, in the case in which crystallinity is able to be efficiently lowered with ethylene alone, the propylene-based copolymer more preferably does not contain butene.

Furthermore, although the contents of ethylene and butene in the propylene-based copolymer can be adjusted by mixing propylene-based copolymers synthesized using a metallocene catalyst, the contents can also be adjusted by mixing a propylene-based copolymer synthesized using a metallocene catalyst and a propylene-based copolymer synthesized using a general-purpose catalyst such as a Ziegler-Natta catalyst.

The propylene-based copolymer preferably has a degree of crystallization of 38-60%. In this case, if the degree of crystallization of the propylene-based copolymer is within the above-mentioned range, as a result of the ratio of the amorphous portion susceptible to the occurrence of molecular vibration at high-frequency bands being further reduced in comparison with the case of the degree of crystallization being < 38%, dielectric tangent can be more adequately lowered. In addition, more suitable flexibility can be obtained in comparison with the case of the degree of crystallization of the propylene-based copolymer exceeding 60%. Moreover, the propylene-based copolymer more preferably has a degree of crystallization of 50-60%.

At least one of a metal deactivator and antioxidant may also be added to the propylene-based copolymer as necessary.

(Metal Deactivator)

The metal deactivator may be any metal deactivator provided it prevents degradation of the base resin caused by contact with the internal conductor 1. This metal deactivator is preferably a hydrazide-based metal deactivator having a chemical structure that differs from a hindered phenol. 3-(N-salicyloyl)amino-1,2,4-triazole (for example, CDA-1 manufactured by ADEKA CORPORATION or CDA-1M manufactured by ADEKA CORPORATION), 2',3-bis[3-(3,5-di-tert-butyl-4-hydroxyphenyl)propionyl] propionohydrazide, or decamethylene dicarboxylic acid disalicyloyl hydrazide (for example, CDA-6 manufactured by ADEKA CORPORATION) is used for this type of metal deactivator. These can be used alone or two or more types can be used as a mixture. In particular, 3-(N-salicyloyl)amino-1,2,4-triazole and 2',3-bis[3-(3,5-di-tert-butyl-4-hydroxyphenyl)propionyl] propionohydrazide are preferable since they enable more effective improvement of heat aging resistance characteristics.

The metal deactivator is preferably incorporated at a ratio of < 1.5 parts by mass (pbm) based on 100 pbm of the base resin. In this case, so-called bloom phenomenon in which particles of metal deactivator appear on the surface of the insulating layer 2 can be adequately inhibited in comparison with the case of incorporating the metal deactivator at a ratio of $\geq$ 1.5 pbm. The metal deactivator is more preferably incorporated at a ratio of $\leq$ 1 pbm on 100 pbm of the base resin. However, it is preferably incorporated at a ratio of $\geq$ 0.01 pbm based on 100 pbm of the base resin from the viewpoint of further improving heat aging resistance characteristics by the metal deactivator.

(Antioxidant)

The antioxidant may be any antioxidant provided it prevents degradation of the base resin due to contact with the internal conductor 1.

Examples of antioxidants include monophenol-based compounds such as 2,6-di-tert-butylphenol, 2,6-di-tert-butyl-4-ethylphenol, 2,6-di-tert-butyl-4-methylphenol, 2,6-di-tert-butyl-$\alpha$-dimethylamino-p-cresol, 2,4,6-tri-tert-butylphenol or o-tert-butylphenol, polyphenol-based compounds such as 2,2'-methylene-bis-(4-methyl-6-tert-butylphenol), 2,2'-methylene-bis-(4-ethyl-6-tert-butylphenol), 4,4'-methylene-bis-(2,6-di-tert-butylphenol), 4,4'-butylidene-bis-(4-methyl-6-tert-butylphenol), alkylated bisphenol or 1,3,5-trimethyl-2,4,6-tris(3,5-di-tert-butyl-4-hydroxybenzy)benzene, hindered phenol-based compounds such as tetrakis-[methylene-3-(3',5'-di-tert-butyl-4'-hydroxyphenyl)propionate]methane, n-octadecyl-3-(4'-hydroxy-3',5'-di-tert-butylphenyl)propionate, 1,1,3-tris(2-methyl-4-hydroxy-5-tert-butylphenyl)butane or 3,9-bis[2-{3-(3-tert-butyl-4-hydroxy-5-methylphenyl) propionyloxy}-1,1-dimethylethyl]-2,4,8,10-tetraoxaspiro [5,5]-undecane, thiobisphenol-based compounds such as 4,4'-thiobis-(6-tert-butyl-3-methylphenol), 4,4'-thiobis-(6-tert-butyl-o-cresol), bis(3,5-di-tert-butyl-4-hydroxybenzyl)sulfide or dialkyl phenol sulfide, phosphites, phosphorous-based tris(nonylphenyl) compounds such as tris(2,4-di-tert-butylphenyl)phosphite, dilauryl thiodipropionate, distearyl thiodipropionate, distearyl-$\beta$,$\beta$-thiodibutyrate, lauryl stearyl thiodipropionate, dimyristyl-3,3'-thiodipropionate, ditridecyl-3,3'-thiodipropionate, sulfur-containing ester-based compounds, amyl thioglycolate, 1,1'-thiobis-(2-naphthol), 2-mercaptobenzimidazole, hydrazine derivatives and phenol-based antioxidants having a chemical structure that differs from a hindered phenol structure. These antioxidants can be used alone or two or more types can be used in combination.

Examples of phenol-based antioxidants having a chemical structure that differs from a hindered phenol structure include the same semi-hindered phenol-based antioxidants and less-hindered phenol-based antioxidants.

Examples of semi-hindered phenol-based antioxidants include 3,9-bis[2-{3-(3-tertiary-butyl-4-hydroxy-5-methylphenyl)propio nyloxy}-1,1-dimethylethyl]-2,4,8,10-tetraoxaspiro[5,5]undecane (for example, ADK STAB AO-80 manufactured by ADEKA CORPORATION), ethylenebis (oxyethylene)bis [3- (5-tert-butyl-hydroxy-m-tolyl) propionate] (for example, IRGANOX 245 manufactured by BASF SE), and triethylene glycolbis[3-(3-tert-butyl-4-hydroxy-5-methylphenyl) propionate] (for example, ADK STAB AO-70 manufactured by ADEKA CORPORATION).

Examples of less-hindered phenol-based antioxidants include 4,4'-thiobis(3-methyl-6-tertiary-butyl)phenol (for example, NOCRAC 300 manufactured by OUCHI SHINKO CHEMICAL INDUSTRIAL CO., LTD.), 1,1,3-tris-(2-methyl-4-hydroxy-5-tertiary-butylphenyl)butane (for example, ADK STAB AO-30 manufactured by ADEKA CORPORATION), and 4,4'-butylidenebis (3-methyl-6-tertiary-butyl)phenol (for example, ADK STAB AO-40 manufactured by ADEKA CORPORATION).

These antioxidants are comparatively insusceptible to frequency, and are able to further improve dielectric characteristics of the insulated wire 5 in the gigahertz band.

The antioxidant is preferably incorporated at a ratio of < 1.5 pbm based on 100 pbm of the above-mentioned base resin. In this case, so-called bloom phenomenon in which particles of antioxidant appear on the surface of the insulating layer 2 can be adequately inhibited in comparison with the case of incorporating the antioxidant at a ratio of $\geq$ 1.5 pbm. The antioxidant is more preferably incorporated at a ratio of $\leq$ 1 pbm based on 100 pbm of the base resin. However, from the viewpoint of further improving heat aging resistance characteristics with the antioxidant, the antioxidant is preferably incorporated at a ratio of $\geq$ 0.01 pbm based on 100 pbm of the base resin.

Furthermore, the ratio at which the antioxidant is incorporated may also be zero from the viewpoints of realizing superior dielectric characteristics as well as crush resistance and heat resistance.

Furthermore, in the cable of the present embodiment, in the case in which the internal conductor 1 has the body portion 1a containing at least one of copper, copper alloy, aluminum and aluminum alloy, and the plating film 1b that covers the body portion 1a and contains at least one of tin and silver as shown in FIG. 3, the insulating layer 2 preferably does not incorporate a metal deactivator and antioxidant, or in other words, the ratios at which the metal deactivator and antioxidant are incorporated to the base resin are preferably zero. In this case, the body portion 1a that causes degradation of the base resin in the insulating layer 2 is covered with the plating film 1b containing at least one of tin and silver. Consequently, degradation of the propylene-based copolymer caused by the internal conductor 1 is adequately prevented even if an antioxidant or metal deactivator is not contained in the insulating layer 2.

The above-mentioned insulating layer 2 is obtained by loading the above-mentioned base resin and, as necessary, the metal deactivator and antioxidant into an extruder, melting, kneading and extruding the resin composition in the extruder, and covering the internal conductor 1 with this extrudate.

<Second Embodiment>

Next, an explanation is provided of a second embodiment of the present invention. The cable of this second embodiment differs from the first embodiment discussed above and which is provided with the insulating layer 2 in which the total content of ethylene and butene in the propylene-based copolymer is ≤ 7 mass-% and the content of butene in the propylene-based copolymer is ≤2 mass-%, in that the propylene-based copolymer contained in the insulating layer 2 satisfies the equation:

```
melting point - crystallization peak temperature =
30-40°C.
```

According to this cable 10 having such a configuration, superior dielectric characteristics in the gigahertz band can be realized by using the insulated wire 5 that uses the insulating layer 2 having the above-mentioned configuration. The reason for being able to realize superior dielectric characteristics in the gigahertz band by the insulated wire 5 in this manner is thought by the inventor of the present invention to be as indicated below. Namely, if the amount of low molecular weight components is large, melting point and crystallization temperature become lower as a result of being influenced by these low molecular weight components. Thus, in the case of the same melting point, the crystallization peak temperature becomes lower the greater the amount of low molecular weight components, and the difference between the peak temperature of the melting point (melting point) and the crystallization peak temperature, namely the peak temperature difference, becomes larger. A small peak temperature difference indicates a narrow molecular weight distribution, and if the molecular weight distribution is narrow, there is less susceptibility to the occurrence of heat loss caused by molecular vibration attributable to low molecular weight components. Thus, superior dielectric characteristics are thought to be obtained. Therefore, dielectric tangent can be lowered by making the difference between melting point and crystallization peak temperature to be 30-40°C as previously described.

The difference between melting point and crystallization peak temperature in the propylene-based copolymer is preferably 30-35°C and more preferably 31-34°C.

Furthermore, although the value of the difference between melting point and crystallization peak temperature of the propylene-based copolymer can be adjusted by mixing propylene-based copolymers synthesized using a metallocene catalyst, it can also be adjusted by mixing a propylene-based copolymer synthesized using a metallocene catalyst and a propylene-based copolymer synthesized using a general-purpose catalyst such as a Ziegler-Natta catalyst.

The present invention is not limited to the above-mentioned embodiments. For example, although examples of applying the insulated wire 5 to a cable such as a coaxial cable or twinax cable are indicated in the above-mentioned embodiments, the insulated wire 5 can also be applied to a high-speed transmission cable such as a USB 3.0 cable, HDMI cable, InfiniBand cable or micro USB cable.

Example

Although the following provides a more specific explanation of the contents of the present invention by indicating examples and comparative examples, the present invention is not limited to the following examples.

(Example 1)

First, an ethylene-propylene random copolymer in the form of WMG03 (melting point: 142°C), obtained by synthesizing using a metallocene catalyst, was prepared for use as a base resin.

The above-mentioned base resin and the antioxidant and metal deactivator shown in Table 1 were loaded into an extruder (product name: LABOPLASTOMILL 4C150, twin-screw segmented extruder 2D30W2, screw diameter (D): 25 mm, effective screw length (L): 750 mm, manufactured by Toyo Seiki Seisaku-Sho, Ltd.) followed by melting and kneading to obtain a molten mixture. At this time, the incorporated amounts of antioxidant and metal deactivator shown in Table 1 were the amounts incorporated based on 100 parts by mass of the base resin (units: parts by mass), and the melting and kneading temperature was 200°C.

The above-mentioned molten extrudate was further melted and kneaded with an extruder (screw diameter (D): 25 mm, effective screw length (L): 800 mm, manufactured by Hijiri Manufacturing Ltd.) set to a temperature of 200°C and extruded into the shape of a tube. A tin-plated copper wire having a diameter of 0.172 mm was then covered with this tubular extrudate. Thus, an insulated wire was fabricated that was composed of a conductor and an insulating layer covering the conductor. At this time, the extrudate was extruded so that the outer diameter of the insulating layer was 0.6 mm and the thickness was 0.215 mm.

The insulated wire obtained in this manner was then wrapped with a laminate tape having a thickness of 25 μm and composed of a laminate of an aluminum layer and a polyethylene terephthalate layer. Next, this was covered with a sheath composed of PVC (polyvinyl chloride) having a thickness of 0.4 mm. Thus, a non-foamed and non-crosslinked coaxial cable was fabricated having impedance of 50 Ω.

(Examples 2-22 and Comparative Examples 1-5)

Coaxial cables were fabricated in the same manner as Example 1 with the exception of incorporating the antioxidants and metal deactivators shown in Table 1 at the ratios shown in Table 1 (units: parts by mass (pbm)) based on 100 pbm of the base resins shown in Table 1.

(Comparative Examples 6-9)

The base resins shown in Table 1 were loaded into an extruder set to a temperature of 200°C (screw diameter (D): 25 mm, effective screw length (L): 800 mm, manufactured by Hijiri Manufacturing Ltd.), melted, kneaded and extruded into the shape of a tube. A tin-plated copper wire having a diameter of 0.172 mm was then covered with this tubular extrudate. Thus, insulated wires were fabricated that were composed of a conductor and an insulating layer covering the conductor. At this time, the extrudate was extruded so that the outer diameter of the insulating layer was 0.6 mm and the thickness was 0.215 mm.

Coaxial cables were then fabricated in the same manner as Example 1 using the insulated wires obtained in this manner.

(Examples 23 and 24 and Comparative Examples 10-12)

Coaxial cables were fabricated in the same manner as Example 1 with the exception of setting the thickness of the insulating layer to values as shown in Table 3.

Furthermore, the products indicated below were specifically used for the base resins, antioxidants and metal deactivators shown in Table 1.

(1) Base Resins

(1-1) WFX4 (WINTEC, manufactured by Japan Polypropylene Corporation)
Propylene-ethylene random copolymer (m.p.: 125°C)
(1-2) WFW4 (WINTEC, manufactured by Japan Polypropylene Corporation)
Propylene-ethylene random copolymer (m.p.: 136°C)
(1-3) WMG03 (WINTEC, manufactured by Japan Polypropylene Corporation)
Propylene-ethylene random copolymer (m.p.: 142°C)
(1-4) WFX6 (WINTEC, manufactured by Japan Polypropylene Corporation)
Propylene-ethylene random copolymer (m.p.: 125°C)
(1-5) FX4G (NOVATEC-PP, manufactured by Japan Polypropylene Corporation)
Propylene-ethylene-butene random copolymer (m.p.: 126°C)
(1-6) FW4B (NOVATEC-PP, manufactured by Japan Polypropylene Corporation)
Propylene-ethylene-butene random copolymer (m.p.: 138°C)

(2) Antioxidants

(2-1) Semi-hindered phenol-based antioxidants

a) AO-80 (ADK STAB AO-80, manufactured by ADEKA CORPORATION) 3,9-bis[2-{3-(3-tertiary-butyl-4-hydroxy-5-methylphenyl)propionyloxy}-1,1-dimethylethyl]-2,4,8,10-tetraoxaspiro[5,5]undecane

b) AO-70 (ADK STAB AO-70, ADEKA CORPORATION) Triethylene glycolbis[3-(3-tert-butyl-4-hydroxy-5-methylphenyl)propionate]

(2-2) Less-hindered phenol-based antioxidants

a) AO-40 (ADK STAB AO-40, manufactured by ADEKA CORPORATION) 4,4'-butylidenebis(3-methyl-6-tertiary-butyl)phenol

b) AO-30 (ADK STAB AO-30, manufactured by ADEKA CORPORATION) 1,1,3-tris-(2-methyl-4-hydroxy-5-tertiary-butylphenyl) butane

c) Noc300 (NOCRAC 300, manufactured by OUCHI SHINKO CHEMICAL INDUSTRIAL CO., LTD.) 4,4'-thiobis(3-methyl-6-tertiary-butyl)phenol

(2-3) Hindered phenol-based antioxidants

a) Ir3114 (IRGANOX 3114, manufactured by BASF SE) 1,3,5-tris(3,5-di-tert-butyl-4-hydroxybenzyl)-1,3,5-triazine-2,4,6(1H,3H,5H)-trione

b) Ir1330 (IRGANOX 1330, manufactured by BASF SE) 3,3',3",5,5',5"-hexa-tert-butyl-a,a',a"-(mesitylene-2,4,6-triyl)tri-p-cresol

(3) Metal Deactivators

(3-1) Non-hindered phenol-based metal deactivators

a) CDA-1 (ADK STAB CDA-1, manufactured by ADEKA CORPORATION) 3-(N-salicyloyl)amino-1,2,4-triazole

b) CDA-6 (ADK STAB CDA-6, manufactured by ADEKA CORPORATION) Decamethylene dicarboxylic acid disalicyloyl hydrazide

(3-2) Hindered phenol-based metal deactivators

a) IrMD1024 (IRGANOX MD1024, manufactured by BASF SE) 2',3-bis[3-(3,5-di-tert-butyl-4-hydroxyphenyl)propionyl] propionohydrazide

[Characteristics Evaluation]

The following characteristics were evaluated for the coaxial cables obtained in Examples 1-24 and Comparative Examples 1-12.

(1) Ethylene and Butene Contents

Ethylene content and butene content were calculated from IR spectra measured for test pieces composed of an insulating layer obtained by peeling off the insulating layer of insulated wires of the coaxial cables of Examples 1-22 and Comparative Examples 1-9. The results are shown in Table 1.

(2) Crystallization Peak Temperature, Melting Heat Peak Temperature (Melting Point) and Degree of Crystallization

Crystallization peak temperature and melting heat peak temperature were calculated by measuring by DSC for test pieces composed of an insulating layer obtained by peeling off the insulating layer of insulated wires of the coaxial cables of Examples 1-22 and Comparative Examples 1-9. The results are shown in Table 1. In addition, degree of crystallization was also calculated by measuring by DSC for the same test pieces. The results are shown in Table 1.

(3) Dielectric Characteristics (tanδ)

Dielectric characteristics were investigated by measuring dielectric tangent (tanδ). Here, dielectric tangent (tanδ) was respectively measured at measuring frequencies of 3.0 GHz, 6.9 GHz, 10.7 GHz and 14.6 GHz with a microwave measuring system using the SUM-TMOmO measurement program available from SUMTEC, Inc. for a sheet obtained by molding resin compositions used to produce the insulating layers of the coaxial cables of Examples 1-22 and Comparative Examples 1-9 into the shape of rods having a diameter of 2 mm and length of 10 cm. The results are shown in Table 2. Acceptance criteria for tan$\delta$ at each frequency were as indicated below.

3.0 GHz: $1.10 \times 10^{-4}$ or less

6.9 GHz: $1.50 \times 10^{-4}$ or less

10.7 GHz: $2.00 \times 10^{-4}$ or less

14.6 GHz: $2.50 \times 10^{-4}$ or less

(4) Attenuation

Attenuation was respectively measured at frequencies of 3.0 GHz, 6.9 GHz, 10.7 GHz and 14.6 GHz using a network analyzer (8722ES, manufactured by Agilent Technologies, Inc.) for the coaxial cables obtained in Examples 1-22 and Comparative Examples 1-9. The results are shown in Table 2.

(5) Heat Resistance

Test pieces were fabricated by cutting the insulated wires of the coaxial cables of Examples 1-22 and Comparative Examples 1-9 to a length of 30 mm. The test pieces were placed in the center of a sample stand having a diameter of 9 mm followed by measurement of the amount of deformation under a load of 250 g, load duration of 1 hour and temperature of 121°C using a heat deformation tester (Triple Parallel Plate Plastomer Model W-3, manufactured by Toyo Seiki Seisaku-sho, Ltd.). Crushing ratio (heat deformation ratio) was calculated from the amount of deformation, and this crushing ratio was used as an indicator of heat resistance. The results are shown in Table 2.

(6) Crush Resistance

Shore D hardness, which indicates surface hardness, was measured and this Shore D hardness was used as an indicator of crush resistance. The Shore D hardness of the insulated wires of Examples 1-22 and Comparative Examples 1-9 was measured in compliance with JIS K7215. Results measured at a load holding time of 5 seconds are shown in Table 2.

(7) Heat Aging Resistance Characteristics

Heat aging resistance characteristics were evaluated in the manner described below. Namely, tensile strength and elongation retention were first measured by carrying out tensile tests on the coaxial cables of Examples 1-22 and Comparative Examples 1-9. These were referred to as "initial tensile strength" and "initial elongation retention", respectively. Next, tensile strength and elongation retention were measured by carrying out tensile tests after allowing the coaxial cables to stand in a constant temperature bath at 110°C and periodically removing from the constant temperature bath. The number of days at which this tensile strength reached 50% of the initial tensile strength or the number of days at which this elongation retention reached 50% of the initial elongation retention was calculated as a relative value in the case that the number of days for Comparative Example 6 in which antioxidant and metal deactivator were not used was set to a value of 100. The results are shown in Table 2. A relative value of $\geq$ 110 was judged to be "acceptable" in terms of having superior heat aging resistance, while a relative value of < 110 was judged to be "unacceptable" in terms of having inferior heat aging resistance.

(8) Bloom (Blooming)

The sheath and laminate tape were removed from the coaxial cables of Examples 1-22 and Comparative Examples 1-9 cut to a length of 3 m, and the exposed surface of the insulating layer was observed visually after leaving for 3 months at 50°C. Bloom was evaluated based on the criteria indicated below. The results are shown in Table 2.

A: No foreign objects able to be confirmed on the surface of
the insulating layer when observing the surface of the insulating layer with a microscope at a magnification of 100 times
B: Foreign objects able to be confirmed on the surface of the insulating layer when observing the surface of the insulating layer with a microscope at a magnification of 100 times
C: Foreign objects able to be confirmed on the surface of the insulating layer when observing the surface of the insulating layer with a microscope at a magnification of 25 times
D: Foreign objects able to be confirmed on the surface of the insulating layer when visually observing the surface of the insulating layer

(9) Low-Temperature Embrittlement Characteristics

Low-temperature embrittlement characteristics were evaluated by carrying out a low-temperature embrittlement test on the coaxial cables of Examples 1, 23 and 24 and Comparative Examples 10-12. The low-temperature embrittlement test was carried out in the manner indicated below.

Namely, embrittlement temperature was measured for the coaxial cables of Examples 1, 23 and 24 and Comparative Examples 10-12 using an embrittlement temperature tester (product name: Brittleness Tester TM-2110, manufactured by Ueshima Seisakusho Co., Ltd.). At this time, coaxial cables (samples) cut to about 60 mm were used as test pieces. Test conditions were in accordance with ASTM D746. In addition, the temperature at which damage or cracks occurred in the insulating layer was taken to be the embrittlement temperature (F50). The relationship between thickness of the insulating layer and embrittlement temperature was then investigated. The results are shown in Table 3.

[Table 1]

| | Base Resin | | | | | | | | Catalyst | Antioxidant | | | | | | | Metal Deactivator | | |
|---|---|---|---|---|---|---|---|---|---|---|---|---|---|---|---|---|---|---|---|
| | Propylene-based copolymer | Melting point (°C) | Degree of crystallization (%) | Ethylene content A (% by mass) | Butene content B (% by mass) | A + B (% by mass) | Crystallization peak temp. (°C) | Melting point-crystallization peak temp. (°C) | | Semi-hindered | | Less-hindered | | | Hindered | | Non-hindered | | Hindered |
| | | | | | | | | | | AO-80 | AO-70 | AO-40 | AO-30 | Noc 300 | Ir 3114 | Ir 1330 | CDA-6 | CDA-1 | IrMD 1024 |
| Ex.1 | WMG03 | 142 | 57 | 1.5 | 0.0 | 1.5 | 110 | 32 | Metal-locene | 0.01 | | | | | | | | | |
| Ex.2 | WMG03 | 142 | 57 | 1.5 | 0.0 | 1.5 | 110 | 32 | Metal-locene | 0.1 | | | | | | | | | |
| Ex.3 | WMG03 | 142 | 57 | 1.5 | 0.0 | 1.5 | 110 | 32 | Metal-locene | 1 | | | | | | | | | |
| Ex.4 | WMG03 | 142 | 57 | 1.5 | 0.0 | 1.5 | 110 | 32 | Metal-locene | | 0.1 | | | | | | | | |
| Ex.5 | WMG03 | 142 | 57 | 1.5 | 0.0 | 1.5 | 110 | 32 | Metal-locene | | | 0.01 | | | | | | | |
| Ex.6 | WMG03 | 142 | 57 | 1.5 | 0.0 | 1.5 | 110 | 32 | Metal-locene | | | 0.1 | | | | | | | |
| Ex.7 | WMG03 | 142 | 57 | 1.5 | 0.0 | 1.5 | 110 | 32 | Metal-locene | | | 1 | | | | | | | |
| Ex.8 | WMG03 | 142 | 57 | 1.5 | 0.0 | 1.5 | 110 | 32 | Metal-locene | | | | 0.1 | | | | | | |
| Ex.9 | WMG03 | 142 | 57 | 1.5 | 0.0 | 1.5 | 110 | 32 | Metal-locene | | | | | 0.1 | | | | | |
| Ex.10 | WMG03 | 142 | 57 | 1.5 | 0.0 | 1.5 | 110 | 32 | Metal-locene | 0.1 | | | | | | | 0.01 | | |
| Ex.11 | WMG03 | 142 | 57 | 1.5 | 0.0 | 1.5 | 110 | 32 | Metal-locene | 0.1 | | | | | | | 0.1 | | |
| Ex.12 | WMG03 | 142 | 57 | 1.5 | 0.0 | 1.5 | 110 | 32 | Metal-locene | 0.1 | | | | | | | 1 | | |
| Ex.13 | WMG03 | 142 | 57 | 1.5 | 0.0 | 1.5 | 110 | 32 | Metal-locene | 0.1 | | | | | | | | 0.01 | |
| Ex.14 | WMG03 | 142 | 57 | 1.5 | 0.0 | 1.5 | 110 | 32 | Metal-locene | 0.1 | | | | | | | | 0.1 | |
| Ex.15 | WMG03 | 142 | 57 | 1.5 | 0.0 | 1.5 | 110 | 32 | Metal-locene | 0.1 | | | | | | | | 1 | |
| Ex.16 | WMG03 | 142 | 57 | 1.5 | 0.0 | 1.5 | 110 | 32 | Metal-locene | 0.01 | | | | | | | | | 0.01 |
| Ex.17 | WMG03 | 142 | 57 | 1.5 | 0.0 | 1.5 | 110 | 32 | Metal-locene | 1 | | | | | | | | | 1 |
| Ex.18 | WMG03 | 142 | 57 | 1.5 | 0.0 | 1.5 | 110 | 32 | Metal-locene | 0.1 | | | | | | | | | 1.5 |

14

| | | | | | | | | | | | | | | | | | | | |
|---|---|---|---|---|---|---|---|---|---|---|---|---|---|---|---|---|---|---|---|
| Ex.19 | WMG03 | 142 | 57 | 1.5 | 0.0 | 1.5 | 110 | 32 | Metal-locene | 0.1 | | | | | | | | 0.1 | |
| Ex.20 | WFW4 | 136 | 52 | 2.3 | 0.0 | 2.3 | 103 | 33 | Metal-locene | 1 | | | | | | | | 1 | |
| Ex.21 | WFX4 | 125 | 41 | 4.4 | 0.0 | 4.4 | 94 | 31 | Metal-locene | 1 | | | | | | | | 1 | |
| Ex.22 | WFX6 | 125 | 37 | 3.2 | 0.2 | 3.4 | 87 | 38 | Metal-locene | 1 | | | | | | | | 1 | |
| Comp. Ex.1 | FX4G | 126 | 37 | 4.2 | 3.2 | 7.4 | 83 | 43 | Ziegle-r-Natta | 1 | | | | | | | | 1 | |
| Comp. Ex.2 | FW4B | 138 | 46 | 3.3 | 2.3 | 5.6 | 91 | 47 | Ziegle-r-Natta | 1 | | | | | | | | 1 | |
| Comp. Ex.3 | WFX6 | 125 | 37 | 3.2 | 0.2 | 3.4 | 87 | 38 | Metal-locene | | | | | | | 1 | | | |
| Comp. Ex.4 | WFX6 | 125 | 37 | 3.2 | 0.2 | 3.4 | 87 | 38 | Metal-locene | | | | | | | | 1 | | |
| Comp. Ex.5 | WMG03 | 142 | 57 | 1.5 | 0.0 | 1.5 | 110 | 32 | Metal-locene | 1.5 | | | | | | | | | |
| Comp. Ex.6 | WMG03 | 142 | 57 | 1.5 | 0.0 | 1.5 | 110 | 32 | Metal-locene | | | | | | | | | | |
| Comp. Ex.7 | FW4B | 138 | 46 | 3.3 | 2.3 | 5.6 | 91 | 47 | Ziegle-r-Natta | | | | | | | | | | |
| Comp. Ex.8 | FX4G | 126 | 37 | 4.2 | 3.2 | 7.4 | 83 | 43 | Ziegle-r-Natta | | | | | | | | | | |
| Comp. Ex.9 | WFW4 | 136 | 52 | 2.3 | 0.0 | 2.3 | 94 | 32 | Metal-locene | | | | | | | | | | |

15

[Table 2]

| | Dielectric Characteristics | | | | | | | | Heat Resistance | Crush Resistance | Heat Aging Resistance Characteristics | Bloom |
|---|---|---|---|---|---|---|---|---|---|---|---|---|
| | tanδ (×10⁻⁴) [-] | | | | Attenuation [dB/m] | | | | Crushing ratio (heat deformation ratio) (%) | Shore D hardness | | |
| | 3.0 GHz | 6.9 GHz | 10.7 GHz | 14.6 GHz | 3.0 GHz | 6.9 GHz | 10.7 GHz | 14.6 GHz | | | | |
| Ex.1 | 0.59 | 0.67 | 0.75 | 0.82 | 2.98 | 4.54 | 5.68 | 6.67 | 12 | 71 | 120 | A |
| Ex.2 | 0.64 | 0.74 | 0.83 | 0.92 | 2.98 | 4.55 | 5.70 | 6.69 | 12 | 71 | 200 | A |
| Ex.3 | 1.05 | 1.35 | 1.63 | 1. 94 | 3.00 | 4.62 | 5.83 | 6.92 | 12 | 71 | 240 | B |
| Ex.4 | 0.92 | 1.00 | 1.07 | 1.14 | 2.99 | 4.57 | 5.73 | 6.74 | 12 | 71 | 200 | A |
| Ex.5 | 0.59 | 0.67 | 0.74 | 0.82 | 2.97 | 4.54 | 5.68 | 6.67 | 12 | 71 | 120 | A |
| Ex.6 | 0.61 | 0.70 | 0.78 | 0.87 | 2.98 | 4.54 | 5.69 | 6.68 | 12 | 71 | 200 | A |
| Ex.7 | 0.79 | 0.99 | 1.17 | 1.39 | 2.99 | 4.57 | 5.75 | 6.79 | 12 | 71 | 240 | B |
| Ex.8 | 0.70 | 0.82 | 0.94 | 1.05 | 2.98 | 4.55 | 5.71 | 6.72 | 12 | 71 | 200 | A |
| Ex.9 | 0.79 | 0.94 | 1.08 | 1.23 | 2.98 | 4.56 | 5.73 | 6.75 | 12 | 71 | 200 | A |
| Ex.10 | 0.64 | 0.74 | 0.83 | 0.93 | 2.98 | 4.55 | 5.70 | 6.70 | 12 | 71 | 260 | A |
| Ex.11 | 0.67 | 0.77 | 0.86 | 0.95 | 2.98 | 4.55 | 5.70 | 6.70 | 12 | 71 | 340 | A |
| Ex.12 | 0.99 | 1.06 | 1.13 | 1.22 | 3.00 | 4.58 | 5.75 | 6.76 | 12 | 71 | 420 | B |
| Ex.13 | 0.63 | 0.73 | 0.83 | 0.92 | 2.98 | 4.55 | 5.69 | 6.69 | 12 | 71 | 240 | A |
| Ex.14 | 0.61 | 0.72 | 0.82 | 0.92 | 2.98 | 4.54 | 5.69 | 6.69 | 12 | 71 | 320 | A |
| Ex.15 | 0.42 | 0.58 | 0.73 | 0.90 | 2.97 | 4.53 | 5.68 | 6.69 | 12 | 71 | 400 | B |
| Ex.16 | 0.59 | 0.67 | 0.75 | 0.82 | 2.97 | 4.54 | 5.68 | 6.67 | 12 | 71 | 140 | A |
| Ex.17 | 0.83 | 1.19 | 1.53 | 1.92 | 2.99 | 4.60 | 5.81 | 6.91 | 12 | 71 | 540 | B |
| Ex.18 | 0.31 | 0.50 | 0.68 | 0.89 | 2.96 | 4.52 | 5.67 | 6.69 | 12 | 71 | 410 | C |
| Ex.19 | 0.84 | 1.13 | 1.41 | 1.70 | 2.99 | 4.58 | 5.78 | 6.85 | 12 | 71 | 320 | A |
| Ex.20 | 0.99 | 1.36 | 1.72 | 2.14 | 3.00 | 4.62 | 5.84 | 6.96 | 15 | 67 | 524 | B |
| Ex.21 | 0.91 | 1.31 | 1.70 | 2.14 | 3.00 | 4.61 | 5.84 | 6.95 | 45 | 65 | 486 | B |
| Ex.22 | 0.97 | 1.48 | 1.94 | 2.47 | 3.00 | 4.62 | 5.87 | 7.01 | 45 | 68 | 486 | B |

(continued)

| | Dielectric Characteristics | | | | | | | | Heat Resistance | Crush Resistance | Heat Aging Resistance Characteristics | Bloom |
|---|---|---|---|---|---|---|---|---|---|---|---|---|
| | tan$\delta$ ($\times 10^{-4}$) [-] | | | | Attenuation [dB/m] | | | | Crushing ratio (heat deformation ratio) (%) | Shore D hardness | | |
| | 3.0 GHz | 6.9 GHz | 10.7 GHz | 14.6 GHz | 3.0 GHz | 6.9 GHz | 10.7 GHz | 14.6 GHz | | | | |
| Comp. Ex. 1 | 1.17 | 1.77 | 2.36 | 2.99 | 3.01 | 4.66 | 5.94 | 7.14 | 50 | 63 | 459 | B |
| Comp. Ex. 2 | 1.27 | 1.76 | 2.23 | 2.74 | 3.00 | 4.64 | 5.90 | 7.05 | 16 | 62 | 513 | B |
| Comp. Ex. 3 | 3.99 | 6.74 | 9.34 | 11.89 | 3.12 | 5.11 | 6.94 | 8.88 | 45 | 68 | 162 | B |
| Comp. Ex. 4 | 3.54 | 6.64 | 9.64 | 12.74 | 3.10 | 5.10 | 6.98 | 9.05 | 45 | 68 | 162 | B |
| Comp. Ex. 5 | 1.28 | 1.69 | 2.08 | 2.51 | 3.02 | 4.65 | 5.90 | 7.04 | 12 | 71 | 300 | C |
| Comp. Ex. 6 | 0.59 | 0.67 | 0.74 | 0.81 | 2.97 | 4.54 | 5.68 | 6.67 | 12 | 71 | 100 | A |
| Comp. Ex. 7 | 1.03 | 1.24 | 1.44 | 1.63 | 2.99 | 4.59 | 5.78 | 6.83 | 16 | 62 | 95 | A |
| Comp. Ex. 8 | 0.93 | 1.25 | 1.57 | 1.88 | 2.99 | 4.60 | 5.81 | 6.89 | 50 | 63 | 85 | A |
| Comp. Ex. 9 | 0.75 | 0.84 | 0.93 | 1.03 | 2.98 | 4.56 | 5.71 | 6.72 | 15 | 67 | 97 | A |

[Table 3]

| | Insulating Layer Thickness (mm) | Low-Temperature Embrittlement Characteristics |
| --- | --- | --- |
| | | Embrittlement Temperature (F50) (°C) |
| Example 1 | 0.215 | -60°C or lower |
| Example 23 | 0.173 | -60°C or lower |
| Example 24 | 0.27 | -37°C |
| Comparative Example 10 | 0.344 | -5°C |
| Comparative Example 11 | 0.397 | -5°C |
| Comparative Example 12 | 0.481 | 5°C |

According to the results shown in Tables 1 and 2, in each of Examples 1-22, dielectric tangent was low, attenuation was low, and the relative number of years representing heat aging resistance was high. In contrast, in Comparative Examples 1-9, it was found that the relative number of years representing heat aging resistance was low or that dielectric tangent was high.

Furthermore, according to the results shown in Table 3, it was also confirmed that embrittlement temperature decreased remarkably and low-temperature embrittlement characteristics improved remarkably by reducing the thickness of the insulating layer to $\leq$ 0.3 mm.

On the basis of the above, according to the insulated wire of the present invention, superior dielectric characteristics in the gigahertz band as well as superior heat aging resistance were confirmed to be able to be realized.

(Example 25)

First, an ethylene-propylene random copolymer in the form of WMG03 (melting point: 142°C), obtained by synthesizing using a metallocene catalyst, was prepared for use as a base resin.

The above-mentioned base resin was loaded into an extruder (screw diameter (D): 25 mm, effective screw length (L): 800 mm, manufactured by Hijiri Manufacturing Ltd.) followed by setting the temperature of the extruder to 200°C, melting, kneading and extruding into the shape of a tube. A tin-plated copper wire having a diameter of 0.172 mm was then covered with this tubular extrudate. Thus, an insulated wire was fabricated that was composed of a conductor and an insulating layer covering the conductor. At this time, the extrudate was extruded so that the outer diameter of the insulating layer was 0.6 mm and the thickness was 0.215 mm.

The insulated wire obtained in this manner was then wrapped with laminate tape having a thickness of 25 $\mu$m and composed of a laminate of an aluminum layer and a polyethylene terephthalate layer. Next, this was covered with a sheath composed of PVC (polyvinyl chloride) having a thickness of 0.4 mm. Thus, a non-foamed and non-crosslinked coaxial cable having impedance of 50 $\Omega$ was fabricated.

(Examples 26-31 and Comparative Examples 13 and 14)

Coaxial cables were fabricated in the same manner as Example 25 with the exception of using the base resins shown in Table 4.

(Examples 32-34 and Comparative Examples 15 and 16)

Molten mixtures were obtained by loading the base resins, antioxidant and metal deactivator shown in Table 4 into an extruder (product name: LABOPLASTOMILL 4C150, twin-screw segmented extruder 2D30W2, screw diameter (D): 25 mm, effective screw length (L): 750 mm, manufactured by Toyo Seiki Seisaku-Sho, Ltd.) in the incorporated amounts shown in Table 4 (units: pbm) followed by melting and kneading. At this time, the melting and kneading temperature was 200°C.

The above-mentioned molten mixtures were further melted and kneaded with an extruder (screw diameter (D): 25 mm, effective screw length (L): 800 mm, manufactured by Hijiri Manufacturing Ltd.) set to a temperature of 200°C and extruded into the shape of a tube. Tin-plated copper wires having a diameter of 0.172 mm were then covered with these tubular extrudates. Thus, insulated wires were fabricated that were composed of a conductor and an insulating layer covering the conductor. At this time, the extrudates were extruded so that the outer diameter of the insulating layer was 0.6 mm and the thickness was 0.215 mm.

Coaxial cables were then fabricated in the same manner as Example 28 using the insulated wires obtained in this manner.

Furthermore, the products indicated below were specifically used for the base resins, antioxidant and metal deactivator shown in Table 4.

(1) Base Resins

(1-1) WFX4 (WINTEC, manufactured by Japan Polypropylene Corporation)
Propylene-ethylene random copolymer
(1-2) WFW4 (WINTEC, manufactured by Japan Polypropylene Corporation)
Propylene-ethylene random copolymer
(1-3) WMG03 (WINTEC, manufactured by Japan Polypropylene Corporation)
Propylene-ethylene random copolymer
(1-4) FX4G (NOVATEC-PP, manufactured by Japan Polypropylene Corporation)
Propylene-ethylene-butene random copolymer
(1-5) FW4B (NOVATEC-PP, manufactured by Japan Polypropylene Corporation)
Propylene-ethylene-butene random copolymer

(2) Antioxidant
(2-1) ADK STAB AO-80, manufactured by ADEKA CORPORATION 3,9-bis[2-{3-(3-tertiary-butyl-4-hydroxy-5-methylphenyl)propionyloxy}-1,1-dimethylethyl]-2,4,8,10-tetraoxaspiro[5,5]undecane
(3) Metal Deactivator
(3-1) ADK STAB CDA-1, manufactured by ADEKA CORPORATION 3-(N-salicyloyl)amino-1,2,4-triazole

Furthermore, in Table 4, the propylene-based copolymer of Examples 28 and 29 indicates a mixture of WFX4 and FX4G, the propylene-based copolymer of Examples 30 and 31 indicates a mixture of WFW4 and FW4B, and values shown in parentheses indicate the mass ratios of WFX4, FX4G, WFW4 or FW4B based on 100 pbm for the total weight of the propylene-based copolymer.

[Characteristics Evaluation]

The following characteristics were evaluated for the coaxial cables obtained in Examples 25-34 and Comparative Examples 13-16.

(1) Ethylene and Butene Contents and Degree of Crystallization

Ethylene content and butene content were calculated in the same manner as Example 1. The results are shown in Table 4. In addition, degree of crystallization was also calculated in the same manner as Example 1. The results are shown in Table 4.

(2) Dielectric Characteristics (tan$\delta$)

Dielectric characteristics were respectively measured at measuring frequencies of 3.0 GHz, 6.9 GHz, 10.7 GHz and 14.6 GHz in the same manner as Example 1. The results are shown in Table 5. Acceptance criteria for tan$\delta$ at each frequency were the same as the criteria applied in Examples 1-24 and Comparative Examples 1-12.

(3) Attenuation

Attenuation was measured in the same manner as Example 1 for the coaxial cables obtained in Examples 25-34 and Comparative Examples 13-16. The results are shown in Table 5.

(4) Heat Resistance

Crushing ratio was calculated in the same manner as Example 1 for the coaxial cables of Examples 25-34 and Comparative Examples 13-16, and the resulting crushing ratios were used as an indicator of heat resistance. The results are shown in Table 5. Furthermore, a crushing ratio of < 50% was judged to be acceptable in terms of having superior heat resistance, while a crushing ratio of $\geq$ 50% was judged to be unacceptable in terms of having inferior heat resistance.

(5) Crush Resistance

Shore D hardness, which indicates surface hardness, was measured and this Shore D hardness was used as an indicator of crush resistance. The Shore D hardness of the insulated wires of Examples 25-34 and Comparative Examples 13-16 was measured in the same manner as Example 1. Results measured at a load holding time of 5 seconds are shown in Table 5. Crush resistance was judged to be acceptable in terms of superior crush resistance if the Shore D hardness was $\geq$ 63, and judged to be unacceptable in terms of inferior crush resistance if the Shore D hardness was < 63.

(6) Heat Aging Resistance Characteristics

Heat aging resistance characteristics were evaluated in the same manner as Example 1. Namely, tensile tests were carried out on the coaxial cables obtained in Examples 25-34 and Comparative Examples 13-16, and the number of days at which the measured tensile strength reached 50% of the initial tensile strength or the number of days at which the measured elongation retention reached 50% of the initial elongation retention was calculated as a relative value in the case that the number of days for Example 25 in which antioxidant and metal deactivator were not used was set to a value of 100. The results are shown in Table 5. A relative value of $\geq$ 86 was judged to be "acceptable", while a relative value of < 86 was judged to be "unacceptable".

(7) Bloom (Blooming)

Bloom was evaluated in the same manner as Example 1. The results are shown in Table 5. Furthermore, the criteria used to evaluate bloom were the same as the criteria applied in Examples 1-24 and Comparative Examples 1-12.

[Table 4]

| | Base Resin | | | | | | | Antioxidant | Metal Deactivator |
| | Propylene-based copolymer | Melting point (°C) | Ethylene content A (% by mass) | Butene content B (% by mass) | A + B (% by mass) | Degree of crystallization (%) | Catalyst | AO-80 | CDA-1 |
|---|---|---|---|---|---|---|---|---|---|
| Ex.25 | WMG03 | 142 | 1.5 | 0.0 | 1.5 | 57 | Metallocene | | |
| Ex.26 | WFW4 | 136 | 2.3 | 0.0 | 2.3 | 52 | Metallocene | | |
| Ex.27 | WFX4 | 126 | 4.4 | 0.0 | 4.4 | 41 | Metallocene | | |
| Ex.28 | WFX4(37) + FX4G(63) | 126 | 4.3 | 2.0 | 6.3 | 38 | Metallocene, Ziegler-Natta | | |
| Ex.29 | WFX4(54) + FX4G(46) | 126 | 4.3 | 1.5 | 5.8 | 39 | Metallocene, Ziegler-Natta | | |
| Ex.30 | WFW4(12) + FW4B(88) | 136,138 | 3.2 | 2.0 | 5.2 | 47 | Metallocene, Ziegler-Natta | | |
| Ex.31 | WFW4(36) + FW4B(64) | 136,138 | 2.9 | 1.5 | 4.4 | 48 | Metallocene, Ziegler-Natta | | |
| Ex.32 | WMG03 | 142 | 1.5 | 0.0 | 1.5 | 57 | Metallocene | 1 | |
| Ex.33 | WMG03 | 142 | 1.5 | 0.0 | 1.5 | 57 | Metallocene | 0.1 | 1 |
| Ex.34 | WFX4 | 126 | 4.4 | 0.0 | 4.4 | 41 | Metallocene | 1 | 1 |
| Comp.Ex. 13 | FX4G | 126 | 4.2 | 3.2 | 7.4 | 37 | Ziegler-Natta | | |
| Comp.Ex. 14 | FW4B | 138 | 3.3 | 2.3 | 5.6 | 46 | Ziegler-Natta | | |
| Comp.Ex. 15 | FX4G | 126 | 4.2 | 3.2 | 7.4 | 37 | Ziegler-Natta | 1 | 1 |
| Comp.Ex. 16 | FW4B | 138 | 3.3 | 2.3 | 5.6 | 46 | Ziegler-Natta | 1 | 1 |

[Table 5]

| | Electric Characteristics | | | | | | | | Heat Resistance | Crush Resistance | Heat Aging Resistance Characteristics | Bloom |
|---|---|---|---|---|---|---|---|---|---|---|---|---|
| | tanδ ($\times 10^{-4}$) [-] | | | | Attenuation [dB/m] | | | | Crushing ratio (heat deformation ratio) (%) | Shore D hardness | | |
| | 3.0 GHz | 6.9 GHz | 10.7 GHz | 14.6 GHz | 3.0 GHz | 6.9 GHz | 10.7 GHz | 14.6 GHz | | | | |
| Ex.25 | 0.59 | 0.67 | 0.74 | 0.81 | 2.97 | 4.54 | 5.68 | 6.67 | 12 | 71 | 100 | A |
| Ex.26 | 0.75 | 0.84 | 0.93 | 1.03 | 2.98 | 4.56 | 5.71 | 6.72 | 15 | 67 | 97 | A |
| Ex.270 | 0.67 | 0.79 | 0.91 | 1.03 | 2.98 | 4.55 | 5.70 | 6.71 | 45 | 65 | 90 | A |
| Ex.28 | 0.83 | 1.08 | 1.33 | 1.57 | 2.99 | 4.58 | 5.77 | 6.83 | 48 | 64 | 87 | A |
| Ex.29 | 0.79 | 1.00 | 1.21 | 1.42 | 2.98 | 4.57 | 5.75 | 6.80 | 47 | 65 | 89 | A |
| Ex.30 | 1.00 | 1.19 | 1.38 | 1.56 | 2.99 | 4.59 | 5.77 | 6.82 | 16 | 63 | 95 | A |
| Ex.31 | 0.93 | 1.10 | 1.26 | 1.41 | 2.99 | 4.58 | 5.76 | 6.79 | 16 | 64 | 96 | A |
| Ex.32 | 1.05 | 1.35 | 1.63 | 1.94 | 3.00 | 4.62 | 5.83 | 6.92 | 12 | 71 | 240 | B |
| Ex.33 | 0.42 | 0.58 | 0.73 | 0.90 | 2.97 | 4.53 | 5.68 | 6.69 | 12 | 71 | 400 | B |
| Ex.34 | 0.91 | 1.31 | 1.70 | 2.14 | 3.00 | 4.61 | 5.84 | 6.95 | 45 | 65 | 486 | B |
| Comp.Ex. 13 | 0.93 | 1.25 | 1.57 | 1.88 | 2.99 | 4.60 | 5.81 | 6.89 | 50 | 63 | 85 | A |
| Comp.Ex. 14 | 1.03 | 1.24 | 1.44 | 1.63 | 2.99 | 4.59 | 5.78 | 6.83 | 16 | 62 | 95 | A |
| Comp.Ex. 15 | 1.17 | 1.77 | 2.36 | 2.99 | 3.01 | 4.66 | 5.94 | 7.14 | 50 | 63 | 459 | B |
| Comp.Ex. 16 | 1.27 | 1.76 | 2.23 | 2.74 | 3.00 | 4.64 | 5.90 | 7.05 | 16 | 62 | 513 | B |

According to the results shown in Table 5, each of Examples 25-34 demonstrated low dielectric tangent, high Shore D hardness, and adequate heat resistance at the level of UL90°C, and satisfied acceptance criteria for all of dielectric characteristics, crush resistance and heat resistance. In contrast, Comparative Examples 13-16 did not satisfy acceptance criteria for at least one of dielectric characteristics, crush resistance and heat resistance.

Accordingly, according to the insulated wire of the present invention, superior dielectric characteristics in the gigahertz band as well as superior crush resistance and heat resistance were confirmed to be able to be realized.

(Example 35)

First, an ethylene-propylene random copolymer in the form of WMG03 (melting point: 142°C), obtained by synthesizing using a metallocene catalyst, was prepared for use as a base resin.

The above-mentioned base resin was loaded into an extruder (screw diameter (D): 25 mm, effective screw length (L): 800 mm, manufactured by Hijiri Manufacturing Ltd.) followed by setting the temperature of the extruder to 200°C, melting, kneading and extruding into the shape of a tube. A tin-plated copper wire having a diameter of 0.172 mm was then covered with this tubular extrudate. Thus, an insulated wire was fabricated that was composed of a conductor and an insulating layer covering the conductor. At this time, the extrudate was extruded so that the outer diameter of the insulating layer was 0.6 mm and the thickness was 0.215 mm.

The insulated wire obtained in this manner was then wrapped with laminate tape having a thickness of 25 $\mu$m and composed of a laminate of an aluminum layer and a polyethylene terephthalate layer. Next, this was covered with a sheath composed of PVC (polyvinyl chloride) having a thickness of 0.4 mm. Thus, a non-foamed and non-crosslinked coaxial cable having impedance of 50 $\Omega$ was fabricated.

(Examples 36-38, 42 and 43 and Comparative Examples 17 and 18)

Coaxial cables were fabricated in the same manner as Example 38 with the exception of using the base resins shown in Table 6.

(Examples 39-41 and Comparative Examples 19 and 20)

Molten mixtures were obtained by loading the base resins, antioxidant and metal deactivator shown in Table 6 into an extruder (product name: LABOPLASTOMILL 4C150, twin-screw segmented extruder 2D30W2, screw diameter (D): 25 mm, effective screw length (L): 750 mm, manufactured by Toyo Seiki Seisaku-Sho, Ltd.) in the incorporated amounts shown in Table 6 (units: pbm) followed by melting and kneading. At this time, the melting and kneading temperature was 200°C.

The above-mentioned molten mixtures were further melted and kneaded with an extruder (screw diameter (D): 25 mm, effective screw length (L): 800 mm, manufactured by Hijiri Manufacturing Ltd.) set to a temperature of 200°C and extruded into the shape of a tube. Tin-plated copper wires having a diameter of 0.172 mm were then covered with these tubular extrudates. Thus, insulated wires were fabricated that were composed of a conductor and an insulating layer covering the conductor. At this time, the extrudates were extruded so that the outer diameter of the insulating layer was 0.6 mm and the thickness was 0.215 mm.

Coaxial cables were then fabricated in the same manner as Example 38 using the insulated wires obtained in this manner.

Furthermore, the products indicated below were specifically used for the base resins, antioxidant and metal deactivator shown in Table 6.

(1) Base Resins

(1-1) WFX4 (WINTEC, manufactured by Japan Polypropylene Corporation)
Propylene-ethylene random copolymer
(1-2) WFW4 (WINTEC, manufactured by Japan Polypropylene Corporation)
Propylene-ethylene random copolymer
(1-3) WMG03 (WINTEC, manufactured by Japan Polypropylene Corporation)
Propylene-ethylene random copolymer
(1-4) WFX6 (WINTEC, manufactured by Japan Polypropylene Corporation)
Propylene-ethylene random copolymer
(1-5) FX4G (NOVATEC-PP, manufactured by Japan Polypropylene Corporation)
Propylene-ethylene-butene random copolymer
(1-6) FW4B (NOVATEC-PP, manufactured by Japan Polypropylene Corporation)

Propylene-ethylene-butene random copolymer

(2) Antioxidant
(2-1) ADK STAB AO-80, manufactured by ADEKA CORPORATION 3,9-bis[2-{3-(3-tertiary-butyl-4-hydroxy-5-methylphenyl)propionyloxy}-1,1-dimethylethyl]-2,4,8,10-tetraoxaspiro[5,5]undecane
(3) Metal Deactivator
(3-1) CDA-1 (ADK STAB CDA-1, manufactured by ADEKA CORPORATION)
3-(N-salicyloyl)amino-1,2,4-triazole

[Characteristics Evaluation]

The following characteristics were evaluated for the coaxial cables obtained in Examples 35-43 and Comparative Examples 17-20.

(1) Crystallization Peak Temperature, Melting Heat Peak Temperature (Melting Point) and Degree of Crystallization

Crystallization peak temperature and melting heat peak temperature were calculated in the same manner as Example 1. The results are shown in Table 6. In addition, degree of crystallization was also calculated in the same manner as Example 1. The results are shown in Table 6.

(2) Dielectric Characteristics (tanδ)

Dielectric characteristics were investigated by measuring dielectric tangent (tanδ). Dielectric tangent (tanδ) was respectively measured at measuring frequencies of 3.0 GHz, 6.9 GHz, 10.7 GHz and 14.6 GHz in the same manner as Example 1. The results are shown in Table 7. Acceptance criteria for tanδ at each frequency were the same as the criteria applied in Examples 1-24 and Comparative Examples 1-12.

(3) Attenuation

Attenuation was measured in the same manner as Example 1 for the coaxial cables obtained in Examples 35-43 and Comparative Examples 17-20. The results are shown in Table 7.

(4) Heat Resistance

Crushing ratio was calculated in the same manner as Example 1 for the coaxial cables of Examples 35-43 and Comparative Examples 17-20, and the resulting crushing ratios were used as an indicator of heat resistance. The results are shown in Table 7. Furthermore, a crushing ratio of < 50% was judged to be acceptable in terms of having superior heat resistance, while a crushing ratio of ≥ 50% was judged to be unacceptable in terms of having inferior heat resistance.

(5) Crush Resistance

Shore D hardness, which indicates surface hardness, was measured and this Shore D hardness was used as an indicator of crush resistance. The Shore D hardness of the insulated wires of Examples 35-43 and Comparative Examples 17-20 was measured in the same manner as Example 1. Results of measuring at a load holding time of 5 seconds are shown in Table 7. Crush resistance was judged to be acceptable in terms of superior crush resistance if the Shore D hardness was ≥ 63, and judged to be unacceptable in terms of inferior crush resistance if the Shore D hardness was < 63.

(6) Heat Aging Resistance Characteristics

Heat aging resistance characteristics were evaluated in the same manner as Example 1. Namely, tensile tests were carried out on the coaxial cables obtained in Examples 35-41 and Comparative Examples 17-20, and the number of days at which the measured tensile strength reached 50% of the initial tensile strength or the number of days at which the measured elongation retention reached 50% of the initial elongation retention was calculated as a relative value in the case that the number of days for Example 1 in which antioxidant and metal deactivator were not used was set to a value of 100. The results are shown in Table 7.

(7) Bloom (Blooming)

Bloom was evaluated in the same manner as Example 1. The results are shown in Table 7. Furthermore, the criteria used to evaluate bloom were the same as the criteria applied in Examples 1-24 and Comparative Examples 1-12.

[Table 6]

| | Base Resin | | | | | | Antioxidant | Metal Deactivator |
|---|---|---|---|---|---|---|---|---|
| | Propylene-based copolymer | Melting point (°C) | Crystallization peak temp. (°C) | Melting point - crystallization peak temp. (°C) | Degree of crystallization (%) | Catalyst | AO-80 | CDA-1 |
| Ex.35 | WMG03 | 142 | 110 | 32 | 57 | Metallocene | | |
| Ex.36 | WFW4 | 136 | 103 | 33 | 52 | Metallocene | | |
| Ex.37 | WFX4 | 126 | 94 | 32 | 41 | Metallocene | | |
| Ex.38 | WFX6 | 125 | 87 | 38 | 41 | Metallocene | | |
| Ex.39 | WMG03 | 142 | 110 | 32 | 57 | Metallocene | 1 | |
| Ex.40 | WMG03 | 142 | 110 | 32 | 57 | Metallocene | 0.1 | 1 |
| Ex.41 | WFX4 | 126 | 94 | 32 | 41 | Metallocene | 1 | 1 |
| Ex.42 | WFX4(37) + FX4G(63) | 126 | 87 | 39 | 38 | Metallocene, Ziegler-Natta | | |
| Ex.43 | WFX4(54) + FX4G(46) | 126 | 89 | 37 | 39 | Metallocene, Ziegler-Natta | | |
| Comp.Ex. 17 | FX4G | 126 | 83 | 43 | 37 | Ziegler-Natta | | |
| Comp.Ex. 18 | FW4B | 138 | 91 | 47 | 46 | Ziegler-Natta | | |
| Comp.Ex. 19 | FX4G | 126 | 83 | 43 | 37 | Ziegler-Natta | 1 | 1 |
| Comp.Ex. 20 | FW4B | 138 | 91 | 47 | 46 | Ziegler-Natta | 1 | 1 |

EP 2 985 765 B1

26

[Table 7]

| | Electric Characteristics | | | | | | | | Heat Resistance | Crush Resistance | Heat Aging Resistance Characteristics | Bloom |
|---|---|---|---|---|---|---|---|---|---|---|---|---|
| | $\tan\delta$ ($\times 10^{-4}$) [-] | | | | Attenuation (dB/m) | | | | Crushing ratio (%) | Shore D hardness | | |
| | 3.0 GHz | 6.9 GHz | 10.7 GHz | 14.6 GHz | 3.0 GHz | 6.9 GHz | 10.7 GHz | 14.6 GHz | | | | |
| Ex.35 | 0.59 | 0.67 | 0.74 | 0.81 | 2.97 | 4.54 | 5.68 | 6.67 | 12 | 71 | 100 | A |
| Ex.36 | 0.75 | 0.84 | 0.93 | 1.03 | 2.98 | 4.56 | 5.71 | 6.72 | 15 | 67 | 97 | A |
| Ex.37 | 0.67 | 0.79 | 0.91 | 1.03 | 2.98 | 4.55 | 5.70 | 6.71 | 45 | 65 | 90 | A |
| Ex.38 | 0.73 | 0.96 | 1.15 | 1.36 | 2.98 | 4.56 | 5.73 | 6.77 | 45 | 68 | 90 | A |
| Ex.39 | 1.05 | 1.35 | 1.63 | 1.94 | 3.00 | 4.62 | 5.83 | 6.92 | 12 | 71 | 240 | B |
| Ex.40 | 0.42 | 0.58 | 0.73 | 0.90 | 2.97 | 4.53 | 5.68 | 6.69 | 12 | 71 | 400 | B |
| Ex.41 | 0.91 | 1.31 | 1.70 | 2.14 | 3.00 | 4.61 | 5.84 | 6.95 | 45 | 65 | 486 | B |
| Ex.42 | 0.83 | 1.08 | 1.33 | 1.57 | 2.99 | 4.58 | 5.77 | 6.83 | 48 | 64 | 87 | A |
| Ex.43 | 0.79 | 1.00 | 1.21 | 1.42 | 2.98 | 4.57 | 5.75 | 6.80 | 47 | 65 | 89 | A |
| Comp.Ex. 17 | 0.93 | 1.25 | 1.57 | 1.88 | 2.99 | 4.60 | 5.81 | 6.89 | 50 | 63 | 85 | A |
| Comp.Ex. 18 | 1.03 | 1.24 | 1.44 | 1.63 | 2.99 | 4.59 | 5.78 | 6.83 | 16 | 62 | 95 | A |
| Comp.Ex. 19 | 1.17 | 1.77 | 2.36 | 2.99 | 3.01 | 4.66 | 5.94 | 7.14 | 50 | 63 | 459 | B |
| Comp.Ex. 20 | 1.27 | 1.76 | 2.23 | 2.74 | 3.00 | 4.64 | 5.90 | 7.05 | 16 | 62 | 513 | B |

According to the results shown in Table 7, each of Examples 35-43 demonstrated low dielectric tangent, high Shore D hardness, and adequate heat resistance at the level of UL90°C, and satisfied acceptance criteria for all of dielectric characteristics, crush resistance and heat resistance. In contrast, Comparative Examples 17-20 did not satisfy acceptance criteria for at least one of dielectric characteristics, crush resistance and heat resistance.

Accordingly, according to the insulated wire of the present invention, superior dielectric characteristics in the gigahertz band as well as superior crush resistance and heat resistance were confirmed to be able to be realized.

EXPLANATION OF REFERENCE NUMBERS

**[0140]**

1 Internal conductor (conductor)
1a Body portion
1b Plating film
2 Insulating layer
5 Insulated wire
10,20 Cable

**Claims**

1. An insulated wire comprising a conductor and, covering the conductor, an insulating layer which has a thickness of ≤ 0.3 mm and contains a propylene-based copolymer which has a melting point of 125-145°C and meets the following requirement (i), (ii) or both (i) and (ii):

   (i) in the propylene-based copolymer the total content of ethylene and butene is ≤ 7 mass-%, and the content of butene is ≤ 2 mass-%;
   (ii) the propylene-based copolymer satisfies the equation: (melting point - crystallization peak temperature) = 30-40°C.

2. The insulated wire of claim 1, wherein the propylene-based copolymer is a propylene-based copolymer obtained by synthesis using a metallocene catalyst.

3. The insulated wire of claim 1, wherein the propylene-based copolymer is a random copolymer.

4. The insulated wire of claim 1, wherein the propylene-based copolymer has a degree of crystallization of 38-60%.

5. The insulated wire of claim 1, wherein the conductor has

   - a body portion containing at least one type of material selected from copper, copper alloy, aluminum and aluminum alloy, and
   - a plating film covering the body portion and containing at least one type of material selected from tin and silver.

6. The insulated wire of claim 1, which is used in a transmission cable.

7. A cable having the insulated wire of claim 1.

8. A transmission cable having the insulated wire of claim 6.

**Patentansprüche**

1. Isolierter Draht, umfassend einen Leiter und eine den Leiter bedeckende isolierende Schicht, die eine Dicke von ≤ 0,3 mm aufweist und ein Copolymer auf Propylenbasis enthält, welches einen Schmelzpunkt von 125-145 °C aufweist und die folgende Bedingung (i), (ii) oder (i) und (ii) beide erfüllt:

   (i) in dem Copolymer auf Propylenbasis beträgt der Gesamtgehalt an Ethylen und Buten ≤ 7 Massen-% und der Gehalt an Buten beträgt ≤ 2 Massen-%;

(ii) das Copolymer auf Propylenbasis erfüllt die Gleichung: (Schmelzpunkt - Kristallisationshöchsttemperatur) = 30-40 °C.

2. Isolierter Draht nach Anspruch 1, wobei das Copolymer aus Propylenbasis ein Copolymer auf Propylenbasis ist, welches durch Synthese unter Verwendung eines Metallocenkatalysators erhalten wurde.

3. Isolierter Draht nach Anspruch 1, wobei das Copolymer aus Propylenbasis ein zufälliges Copolymer ist.

4. Isolierter Draht nach Anspruch 1, wobei das Copolymer aus Propylenbasis einen Kristallisationsgrad von 38-60% aufweist.

5. Isolierter Draht nach Anspruch 1, wobei der Leiter folgendes aufweist:

- einen Körperanteil, der mindestens eine Art von Material, ausgewählt aus Kupfer, Kupferlegierung, Aluminium und Aluminiumlegierung, enthält, und
- einen Plattierungsfilm, der den Körperanteil bedeckt und mindestens eine Art von Material, ausgewählt aus Zinn und Silber, enthält.

6. Isolierter Draht nach Anspruch 1, der in einem Übertragungskabel verwendet wird.

7. Kabel, das den isolierten Draht nach Anspruch 1 aufweist.

8. Übertragungskabel, das den isolierten Draht nach Anspruch 6 aufweist.

## Revendications

1. Fil isolé comprenant un conducteur et, recouvrant le conducteur, une couche isolante qui a une épaisseur de $\leq 0,3$ mm et contient un copolymère à base de propylène qui a un point de fusion de 125 à 145 °C et répond à l'exigence suivante (i), (ii), ou à la fois (i) et (ii) :

(i) dans le copolymère à base de propylène la teneur totale en éthylène et en butène est $\leq 7$ % en masse, et la teneur en butène est $\leq 2$ % en masse ;
(ii) le copolymère à base de propylène satisfait l'équation : (point de fusion - température de pic de cristallisation) = 30 à 40 °C.

2. Fil isolé selon la revendication 1, dans lequel le copolymère à base de propylène est un copolymère à base de propylène obtenu par synthèse en utilisant un catalyseur métallocène.

3. Fil isolé selon la revendication 1, dans lequel le copolymère à base de propylène est un copolymère aléatoire.

4. Fil isolé selon la revendication 1, dans lequel le copolymère à base de propylène a un degré de cristallisation de 38 à 60 %.

5. Fil isolé selon la revendication 1, dans lequel le conducteur comporte

- une partie corps contenant au moins un type de matériau choisi parmi le cuivre, un alliage de cuivre, l'aluminium et un alliage d'aluminium, et
- un film de placage recouvrant la partie corps et contenant au moins un type de matériau choisi parmi l'étain et l'argent.

6. Fil isolé selon la revendication 1, qui est utilisé dans un câble de transmission.

7. Câble comportant le fil isolé selon la revendication 1.

8. Câble de transmission comportant le fil isolé selon la revendication 6.

# Fig.1

# Fig.2

# Fig.3

1

1a

1b

# Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009081132 A

**Non-patent literature cited in the description**

- Polymer Analysis Handbook of the Polymer Analysis Research Group. The Japan Society for Analytical Chemistry, 413-415

- Polypropylene Handbook. 1998, 149